# EUROPÄISCHE PATENTANMELDUNG

(11) **EP 2 492 569 A2**
(43) Veröffentlichungstag der Anmeldung: **29.08.2012**
(21) Anmeldenummer: 12168285.0
(22) Anmeldetag: 28.06.2007
(51) Int. Cl.: F16L 21/03, F16L 21/08

(54) **Muffenverbindung**

(30) Priorität: 30.06.2006 DE 102006031582
(62) Teilanmeldung aus: 07764916.8
(71) Anmelder: Tiroler Röhren- und Metallwerke Aktiengesellschaft, 6060 Hall in Tirol (AT)
(72) Erfinder: Die Erfindernennung liegt noch nicht vor
(74) Vertreter: Witte, Weller & Partner

(57) **Zusammenfassung**

Die vorliegende Erfindung betrifft einen Dichtungsring für Muffenverbindung zur Verbindung zweier Rohre, Rohrformstücke oder dgl., mit einem dem einen Rohr zugeordneten Muffenende (16), in das ein Spitzende des anderen eine Stützleiste (64) aufweisenden Rohrs einführbar ist und das einen radial nach innen ragenden Rand (20) mit zumindest einer ringsegmentförmigen Ausnehmung (26-29) aufweist, und einer Verriegelungsvorrichtung zum Verriegeln des Spitzendes in dem Muffenende, indem sich die Stützleiste an der Verriegelungsvorrichtung und diese an dem Rand abstützt, wobei die Verriegelungsvorrichtung zumindest zwei ringsegmentförmige Verriegelungselemente umfasst. Der Dichtungsring zeichnet sich dadurch aus, dass ein Längsende des Dichtungsrings schwalbenschanzförmig ausgebildet ist und das gegenüberliegende andere Längsende einen sich nach außen erstreckenden Wulst (86) aufweist, und dass Außen- und Innenfläche, die die beiden Längsenden verbinden, - im Längsschnitt- konkav ausgebildet sind.

## Beschreibung

Die vorliegende Erfindung betrifft eine Muffenverbindung zur Verbindung zweier Rohre, Rohrformstücke oder dergleichen, mit einem dem einem Rohr zugeordneten Muffenende, in das ein Spitzende des anderen eine Stützleiste aufweisenden Rohrs einführbar ist und das einen radial nach innen ragenden Rand mit zumindest einer ringsegmentförmigen Ausnehmung aufweist, und einer Verriegelungsvorrichtung zum Verriegeln des Spitzendes in dem Muffenende, indem sich die Stützleiste an der Verriegelungsvorrichtung und diese an dem Rand abstützt, wobei die Verriegelungsvorrichtung zumindest zwei ringsegmentförmige Verriegelungselemente umfasst.

Muffenverbindungen der vorgenannten Art sind bspw. aus der Druckschrift DE 199 187 17 C1 bekannt. Sie dienen zur gummigedichteten Verbindung zweier zumeist unter Druck stehender Rohre. Zur Zugsicherung weisen diese bekannten Muffenverbindungen Verriegelungsvorrichtungen auf, die verhindern, dass das Spitzende des einen Rohrs aus dem Muffenende des anderen Rohrs herausgezogen werden kann.

Eine solche Verriegelungsvorrichtung umfasst zwei aus Metall gefertigte Verriegelungselemente bzw. Riegel, die jeweils an einem Ende einen als Anschlag dienenden Vorsprung (Anschlagelemente) aufweisen.

Zur Erzielung einer Muffenverbindung wird das Spitzende zunächst in das Muffenende bis zum Anschlag an den Muffengrund eingeschoben. Anschließend wird der eine Riegel in die Muffenausnehmung eingelegt und im Uhrzeigersinn solange verschoben, bis der Vorsprung am Rand der Ausnehmung anschlägt. Der Riegel stützt sich in dieser Position in radialer Richtung an dem Spitzende des Rohrs ab und in axialer Richtung einerseits an der Stützleiste und andererseits an der Innenseite des Randes des Muffenendes.

Anschließend wird der zweite Riegel ebenfalls in die Ausnehmung des Muffenendes eingelegt und entgegen dem Uhrzeigersinn verschoben, bis der Vorsprung an einem Rand der Ausnehmung anschlägt. Auch dieser Riegel stützt sich in radialer als auch in axialer Richtung in gleicher Weise ab wie der erste Riegel.

Obgleich sich diese Muffenverbindung in der Praxis sehr bewährt hat, besteht weiterhin das Bedürfnis, sowohl die Handhabung als auch die Funktionalität zu verbessern, als auch die Herstellungskosten zu reduzieren.

In der Druckschrift DE 33 36 855 A1 ist ebenfalls eine schubgesicherte Steckverbindung für Rohre, insbesondere Muffenrohre, offenbart. Bei dieser Lösung ist in der Muffe vom Muffenende aus gesehen vor einem Dichtring eine ringförmige Ausnehmung vorgesehen, deren zum Muffenende hin gerichteter Abschnitt von einer Kegelfläche begrenzt ist und in der wenigstens ein Verriegelungsteil angeordnet ist, das sich radial auf der Kegelfläche und mit einer zylindrischen Stützfläche auf einem in die Muffe hineingeführten Spitzende sowie axial auf der Kegelfläche und an einem das Spitzende umgebenden Haltewulst abstützt. Das bzw. die Verriegelungselemente werden über eine einzige Öffnung eingelegt und müssen ausgerichtet werden, wobei in der Praxis die Verriegelungselemente dann in der ausgerichteten Position mittels eines Spannbandes zu sichern sind. Abhängig von der Nennweite ist eine Vielzahl von Verriegelungselementen einzulegen, wobei dieses System allerdings erst ab einer Nennweite von DN 700 in der Praxis zur Verfügung steht.

Insgesamt ist die Handhabung der Verriegelungselemente, insbesondere deren Einlegen und Ausrichten, aufwändig.

Vor diesem Hintergrund besteht die Aufgabe der vorliegenden Erfindung darin, die Muffenverbindung der eingangs erwähnten Art so weiterzubilden, dass sich die Handhabung vereinfacht, die Herstellungskosten gesenkt werden und die Funktionssicherheit erhöht wird.

Die der Erfindung zugrunde liegende Aufgabe wird dadurch gelöst, dass zumindest vier Ausnehmungen vorgesehen sind, die in Umfangsrichtung gleichmäßig beabstandet angeordnet sind und dass die beiden Verriegelungselemente jeweils zwei ringsegmentförmige Verriegelungsteile aufweisen, die jeweils über einen Steg miteinander verbunden sind, wobei der Abstand der beiden Verriegelungsteile eines Verriegelungselements dem Abstand zweier Ausnehmungen entspricht.

Das heißt mit anderen Worten, dass die Verriegelungsvorrichtung zwei identisch ausgebildete Verriegelungselemente aufweist, deren insgesamt vier Verriegelungsteile in Umfangsrichtung des Muffenendes gleichmäßig beabstandet anliegen. Das hat den Vorteil, dass die Verteilung der Spannungen in der Muffe vergleichmäßigt wird und damit eine Reduzierung der Wanddicke möglich wird bzw. eine höhere Sicherheit gegen das Bersten der Muffe bzw. ein geringeres Ovalisieren des Rohrs erreicht wird.

Die identische Ausgestaltung der Verriegelungselemente im Gegensatz zu den bisherigen "linken" und "rechten" Riegeln führt zu dem Vorteil, dass die Herstellungskosten gesenkt werden können. Darüber hinaus wird die Handhabung auf der Baustelle einfacher, da gleiche Bauteile verwendet werden können. Schließlich wird die Handhabung auf der Baustelle weiter dadurch verbessert, dass vier Ausnehmungen zum Einlegen der Verriegelungselemente zur Verfügung stehen und nicht nur eine Öffnung wie bei der bisherigen Lösung.

Ein weiterer Vorteil der eingesetzten Verriegelungselemente besteht darin, dass das in das Muffenende eingesteckte Rohr leichter abgewinkelt werden kann, was insbesondere durch die gleichmäßige Anordnung der Verriegelungselemente erzielt wird. Darüber hinaus wird auch die Zentrierung der Verbindung in der Muffe verbessert.

Ein weiterer Vorteil der erfindungsgemäßen Lösung liegt darin, dass der Steg nicht die Abwinkelbarkeit einschränkt, da er immer in einer der Ausnehmungen positioniert ist. Bei dem zuvor erwähnten Stand der Technik (DE 33 36 885) wird durch den Steg des Verriegelungselements die Abwinkelbarkeit negativ beeinflusst, d.h. reduziert. Die Abwinkelbarkeit der Verbindung liegt bei der erfindungsgemäßen Lösung z.B. bei der Nennweite DN 200 bei ca. 6° bis 8°, bei dem in der Druckschrift erwähnten System jedoch nur bei maximal 4°. Durch eine höhere Abwinkelbarkeit kann die Anzahl der Formstücke bei der Leitungsverlegung reduziert werden.

Schließlich hat die erfindungsgemäße Muffenverbindung den Vorteil, dass die Längskräfte auf die Rohroberfläche gleichmäßiger verteilt werden und dadurch die Möglichkeit besteht, bei gleicher Wanddicke höhere Drücke oder einen bestimmten Druck bei geringerer Wanddicke als bisher aufnehmen zu können. So könnte bspw. bei hohen Drücken auf den Hochdruckriegel verzichtet werden.

In einer bevorzugten Weiterbildung ist jedem Verriegelungselement ein Halteelement zugeordnet.

Dieses Halteelement dient dazu, die Verriegelungselemente gegen ein Verdrehen in dem Muffenende zu sichern, so dass die Verriegelungselemente nicht herausfallen können.

In einer bevorzugten Weiterbildung liegt das Halteelement parallel zu dem Steg zwischen den beiden Verriegelungsteilen und stützt sich am Rand ab, so dass ein Verdrehen des Verriegelungselements im Muffenende verhindert wird.

Diese Ausgestaltung hat den Vorteil, dass auf einfache Art und Weise eine Verdrehsicherung erreichbar ist. Ferner liegt das Halteelement auf dem Steg auf und wird durch die Nase an einem Herausfallen gehindert.

In einer bevorzugten Weiterbildung ist das Halteelement aus einem Kunststoff, vorzugsweise EPDM (Ethylen-Propylen-Terpolimerisat) hergestellt. Die Herstellung des Halteelements aus Kunststoff ist insbesondere unter Kostengesichtspunkten vorteilhaft. Der Einsatz von EPDM hat den Vorteil, dass dieses Material einerseits die notwendige Flexibilität aufweist, um das Halteelement über die Nase hinweg führen zu können und andererseits eine außergewöhnlich gute Beständigkeit gegen Sauerstoff, Ozon sowie weiteren äußeren Witterungseinflüssen besitzt, was gerade bei im Erdreich verlegten Druckrohren von großer Wichtigkeit ist.

In einer bevorzugten Weiterbildung sind die Verriegelungselemente aus Metall, vorzugsweise aus einem Gussmaterial, bspw. einem duktilen Gusseisen, oder einem druckbeständigen Kunststoffmaterial hergestellt.

Dies hat den Vorteil, dass aufgrund der Festigkeit des Materials hohe Zug- und Druckkräfte aufnehmbar sind.

In einer bevorzugten Weiterbildung erstreckt sich der Steg in Richtung der Längsachse (Längsachse des Rohrs und des Muffenendes) und weist an dessen Ende eine Nase auf, die sich in radialer Richtung (bezüglich des Rohrs und des Muffenendes) erstreckt und parallel zur Längsachse liegt, wobei die Nase - im eingelegten Zustand der Verriegelungsteile - außerhalb des Muffenendes ist.

Diese technische Ausgestaltung hat sich in der Praxis als besonders vorteilhaft herausgestellt, wobei insbesondere die Handhabung vereinfacht wird. Das Verriegelungselement kann sehr gut an der Nase gehalten, in das Muffenende eingelegt und anschließend in die gewünschte Position verschoben werden.

In einer bevorzugten Weiterbildung weist das Muffenende an seiner Innenseite eine in Umfangsrichtung umlaufende halbkreisförmige Nut und eine sich daran anschließende schräg zur Längsachse verlaufende Umfangsfläche auf, wobei die Nut und die Umfangsfläche zur Aufnahme eines entsprechend ausgebildeten Dichtungsrings vorgesehen sind. Bevorzugt weist der Dichtungsring einen ersten Längsabschnitt auf, der eine nach außen abgerundete Fläche aufweist, die an die Nut angepasst ist, und einem zweiten Längsabschnitt, der schwalbenschwanzförmig ausgebildet ist, wobei der erste Längsabschnitt als Halteteil und der zweite Längsabschnitt als Dichtteil dienen.

Diese Maßnahmen haben sich in der Praxis als besonders vorteilhaft herausgestellt. Die runde Form des Halteteils des Dichtrings ermöglicht eine bessere Beschichtung der Oberfläche und ein leichteres Einlegen in die Nut. Darüber hinaus existiert eine verlängerte gerade Stirnfläche am Dichtring, die der besseren Abstützung bei hohen Innendrücken dient. Schließlich weist der Dichtteil eine ausgeprägte Dichtlippe auf, die eine bessere Anpressung an die Muffeninnenoberfläche bzw. die Rohroberfläche erzielt und darüber hinaus die Abwinkelbarkeit der Muffenverbindung erleichtert und verbessert. Schließlich lässt sich mit dem erfindungsgemäßen Dichtring eine Reduzierung der Montagekräfte durch die geringere Neigung der inneren Dichtlippe erreichen.

In einer bevorzugten Weiterbildung ist sowohl die nach außen zeigende als auch nach innen zeigende Fläche des Dichtungsrings - im Längsschnitt betrachtet - konkav ausgebildet. Bei einer weiteren bevorzugten Ausgestaltung weist der Dichtungsring eine in Umfangsrichtung verlaufende Feder im Bereich des ersten Längsabschnitts auf. Vorzugsweise ist diese Feder in den Dichtungsring einvulkanisiert.

Weiter bevorzugt weist der Rand eine abgeschrägte inner Ringfläche 24 auf, wobei der Winkel zwischen Ringfläche und Längsachse des Muffenendes etwa 30° beträgt. Die vorgenannten Maßnahmen führen zu weiteren Vorteilen. Durch den gewählten Winkel von 30° der inneren Ringfläche lassen sich die Spannungen am Rohrende und in der Muffe besser aufteilen und die Baulänge der Schubsicherungskammer kann reduziert werden. Die spezielle Ausgestaltung des Dichtungsrings, insbesondere dessen spezielle Geometrie, lässt eine deutliche Reduzierung der erforderlichen Montagekräfte gegenüber den herkömmlichen Systemen zu. Darüber hinaus ist es möglich, die Muffeninnenseite zusätzlich zu schmieren, um die Montagekräfte weiter zu verringern, was bei dem in der oben genannten Druckschrift DE 33 36 855 beschriebenen System nicht möglich ist, da hierbei der Dichtring aus seinem Sitz gezogen wird.

Durch die spezielle Kopfgeometrie ist die Muffenverbindung bis mindestens 10 bar Außendruck dicht.

Vorzugsweise besteht der Dichtungsring nur aus einer Materialkomponente mit einer Shore-Härte von 55. Die im Stand der Technik eingesetzten Dichtungsringe weisen zumeist einen Hartteil (Kopf) und einen Weichteil (Dichtbereich) auf, was bei ungünstigen Paarungen der Abmessungstoleranzen zu Problemen führen kann. Durch das einvulkanisierte Federelement ist der erfindungsgemäße Dichtungsring in der Lage, große Belastungen aufzunehmen.

Die der Erfindung zugrunde liegende Aufgabe wird auch von einem Dichtungsring für eine vorgenannte Muffenverbindung gelöst, die die bereits erläuterten Merkmale aufweist. Das heißt mit anderen Worten, dass die vorliegende Erfindung auch einen Dichtungsring eigenständig betrifft, unabhängig von der erfindungsgemäßen Muffenverbindung.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere sei an dieser Stelle angemerkt, dass der Dichtring auch alleine ohne die Muffenverbindung einsetzbar ist.

Die Erfindung wird nun anhand eines Ausführungsbeispiels mit Bezug auf die Zeichnung näher erläutert. Dabei zeigen:
- Figuren 1a bis d: schematische Darstellungen einer Muffenverbindung;
- Figuren 2a bis d: verschiedene Darstellungen eines Verriegelungselements,
- Fig. 3a: eine schematische Darstellung einer ersten Variante eines Dichtungsrings im Querschnitt,
- Fig. 3b: eine Darstellung einer zweiten Variante eines Dichtungsrings im Querschnitt; und
- Figuren 4a bis e: mehrere Ansichten von Muffenverbindungen.

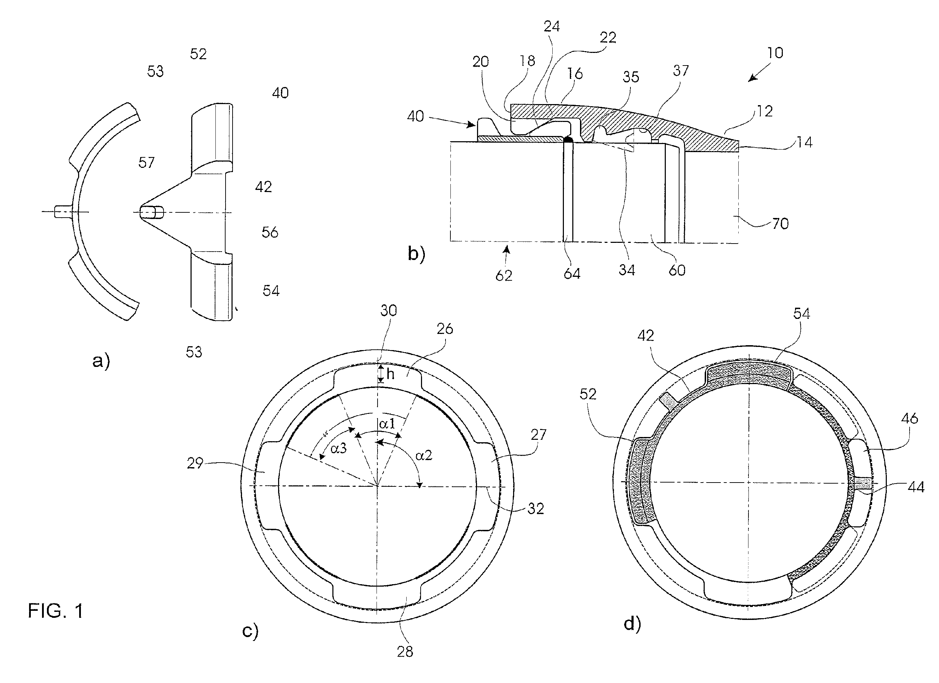

In Figuren 1a bis d, insbesondere Fig. 1b ist eine Muffenverbindung dargestellt und mit dem Bezugszeichen 10 gekennzeichnet. Diese Muffenverbindung 10 umfasst ein Muffenstück 12, das entweder integraler Bestandteil eines Rohrs 14 oder mit einem solchen Rohr 14 verbindbar ist. Der Einfachheit halber wird nachfolgend immer von einem Rohr gesprochen. Es versteht sich, dass statt dem Rohr 14 selbstverständlich auch ein Formstück oder dergleichen verwendbar ist. Das Muffenstück 12 weist einen Längsabschnitt auf, der als Muffenende 16 bezeichnet wird und einen gegenüber dem Innendurchmesser des Rohrs 14 vergrößerten Innendurchmesser aufweist. Das Muffenende 16 weist an seiner Stirnseite 18 einen flanschartigen Rand 20 auf, der sich in radialer Richtung um eine Länge h nach innen erstreckt. Dieser Rand 20 ist an der Stirnseite 18 eben ausgebildet, während er an der Innenseite 22 konisch verläuft, so dass der Innendurchmesser des Rands 20 an der Stirnseite 18 kleiner ist als der Innendurchmesser des Randes 20 auf der Innenseite 22. Es bildet sich somit eine bezüglich der Längsachse schräg verlaufende innere Ringfläche 24 aus. Der Winkel dieser Ringfläche zur Längsachse beträgt bevorzugt etwa 30°.

Der Rand 20 umfasst in dem vorliegenden Ausführungsbeispiel vier Ausnehmungen 26, 27, 28, 29, die in Umfangsrichtung gleichmäßig beabstandet sind und bezüglich ihrer Erstreckung in Umfangsrichtung ebenfalls gleich sind. Im vorliegenden Ausführungsbeispiel besitzen die Ausnehmungen 26-29 jeweils eine Öffnungsbreite von α1, wobei α1 im Bereich von 40-50° liegt. Der Abstand zweier benachbarter Ausnehmungen 26-29 beträgt α2, im vorliegenden Ausführungsbeispiel 90°. Der geschlossene Abschnitt des Rands 20 zwischen zwei benachbarten Ausnehmungen 26-29 ist in Fig. 1c mit α3 gekennzeichnet und beträgt vorzugsweise etwa 45°.

Die radiale Erstreckung der Ausnehmungen ist gleich und in Fig. 1c mit h gekennzeichnet.

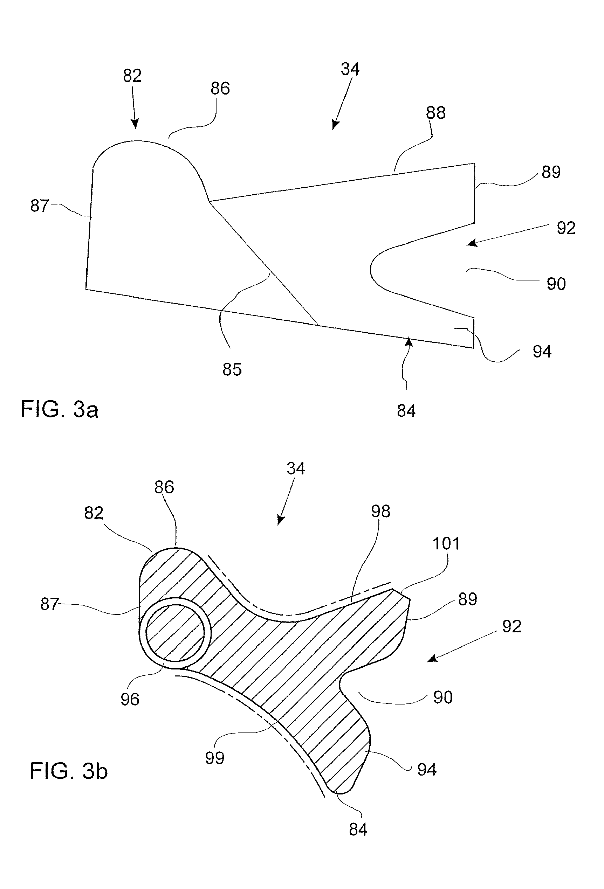

Fig. 1 lässt noch eine besonders ausgestaltete Ringdichtung 34 erkennen, die in einer Ringnut 35 auf der Innenseite des Muffenendes 16 zumindest teilweise liegt und sich in radialer Richtung nach innen erstreckt. Diese Dichtung ist vorzugsweise aus EPDM (Ethylen-Propylen-Terpolimerisat) hergestellt. Eine genauere Beschreibung der Ringdichtung 34 erfolgt später mit Bezug auf die Fig. 3.

Zu der Muffenverbindung 10 gehört ferner eine Verriegelungsvorrichtung 40, die zwei Verriegelungselemente 42 und 44 umfasst, wobei beide Verriegelungselemente 42, 44 identisch ausgebildet sind.

Ein Verriegelungselement 42 bzw. 44 besteht aus zwei ringsegmentförmigen Verriegelungsteilen 52, 54, die durch einen Steg 56 miteinander verbunden sind. Insgesamt bilden die beiden Verriegelungsteile 52, 54 und der dazwischenliegende Steg 56 ein ringsegmentförmiges Bauteil, wie dies bspw. in Fig. 1a gut zu erkennen ist.

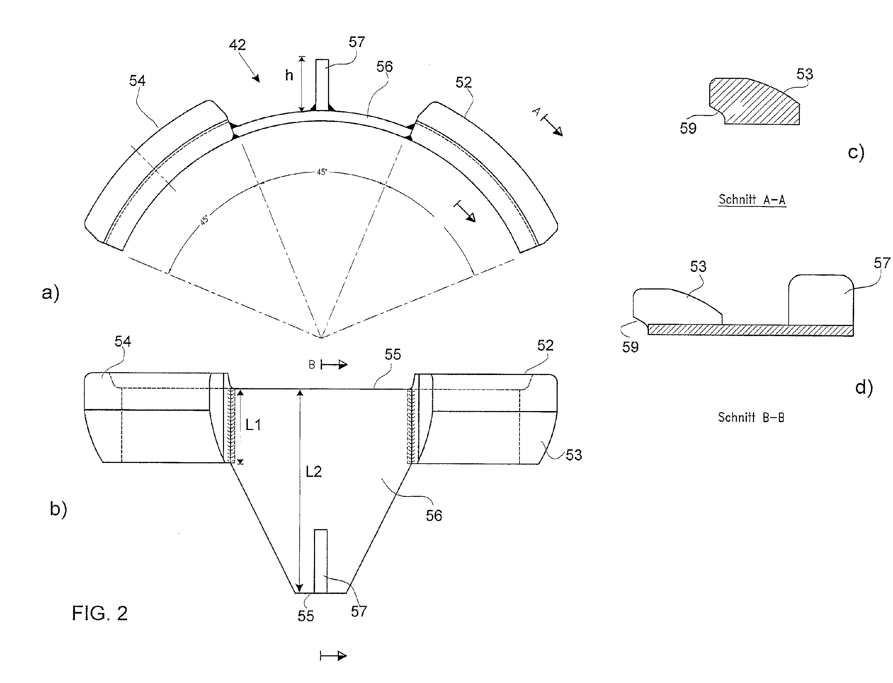

Der genaue Aufbau eines Verriegelungselements 42 ist in Fig. 2 dargestellt. Deutlich zu erkennen ist dabei, dass die beiden Verriegelungsteile 52, 54 eine äußere schräg zur Längsachse verlaufende Anschlagfläche 53 aufweisen und eine innere, d.h. dem Steg 56 zugewandte weitere Anschlagfläche 59. Beide Anschlagflächen 53 und 59 sind diametral angeordnet, wie sich in Fig. 2c gut erkennen lässt. Die Anschlagfläche 59 ist als gekrümmte Ausnehmung vorgesehen, um mit einer im Querschnitt halbkreisförmigen Leiste zusammenwirken zu können.

Die äußere Anschlagfläche 53 ist hinsichtlich ihrer Schräge so ausgebildet, dass sie mit der schrägen inneren Ringfläche 24 des Muffenendes zusammenwirken kann.

Der Steg 56 besitzt - in Draufsicht - eine trapezähnliche Form mit zwei parallelen Seiten 55. An der kürzeren Seite 55 des Stegs 56 ist eine Nase 57 vorgesehen, die sich in radialer Richtung erstreckt und parallel zu der Längsachse verläuft. Der Steg 57 besitzt eine Höhe h, die größer ist als die entsprechende Höhe der beiden Verriegelungsteile 52, 54.

Aus der in Fig. 2b gezeigten Draufsicht ist auch zu erkennen, dass die Länge L2 des Stegs 56 größer ist als die Länge L1 der beiden Verriegelungsteile 52, 54.

Das Verriegelungselement 42 kann einstückig ausgebildet sein oder aus mehreren Bestandteilen zusammengefügt werden. In Fig. 2 ist das Verriegelungselement 42 bspw. aus den Einzelteilen Verriegelungsteil 52, 54, Steg 56 und Nase 57 bspw. durch Schweißen hergestellt worden.

An dieser Stelle sei nochmals angemerkt, dass die beiden Verriegelungselemente 42, 44 identisch zueinander ausgebildet sind.

Schließlich ist in Fig. 2a noch zu erkennen, dass sich die beiden Verriegelungsteile 52, 54 über einen Winkelbereich von etwa 45° erstrecken und der Steg 56 sich ebenfalls über etwa 45° erstreckt. Insgesamt ist das Verriegelungselement 42 so auszugestalten, dass der Winkel des Stegs 56 nicht kleiner als α3 und die beiden Winkel der Verriegelungsteile 52 nicht größer als α1 sind, so dass ein Verriegelungselement 42 in zwei Ausnehmungen 26-29 eingelegt werden kann, was später noch genauer beschrieben werden wird.

Wie sich aus Fig. 1 ergibt, liegen die beiden Verriegelungselemente 42, 44 an einem Spitzende 60 eines Rohrs 62 an. Das heißt also, dass der Innendurchmesser der Verriegelungselemente 42, 44 etwa dem Außendurchmesser des Rohrs 62 entspricht. Die Erstreckung der beiden Verriegelungselemente 42, 44 in Umfangsrichtung beträgt im vorliegenden Ausführungsbeispiel etwa 135°.

Das Spitzende 60 des Rohrs 62 weist eine Stützleiste 64 auf, die sich in einer zur Längsachse des Rohrs senkrechten Ebene liegend über einen gesamten Rohrumfang erstreckt. Vorzugsweise ist diese Stützleiste als Schweißraupe ausgeführt. Diese Stützleiste 64 dient dazu, den Außendurchmesser des Spitzendes 60 zu vergrößern. Der Außendurchmesser der Stützleiste 64 und der Innendurchmesser der beiden Verriegelungselemente 42, 44 müssen so aufeinander abgestimmt sein, dass der Außendurchmesser der Stützleiste den Innendurchmesser der Verriegelungselemente um einen vorgegebenen Wert übersteigt. Wie bereits zuvor kurz erwähnt, ist die Anschlagfläche 59 der Verriegelungsteile 52, 54 an die Form der Stützleiste 64 angepasst.

Wie sich weiter aus Fig. 1b ergibt, umgibt die Ringdichtung 34 das Spitzende vollständig und dichtet einen Innenraum 70 des Muffenendes 16 nach außen ab. Um zu verhindern, dass das Spitzende 60 wieder aus dem Muffenende 16 herausgezogen werden kann, ist die Verriegelungsvorrichtung 40 mit den beiden Verriegelungselementen 42, 44 in das Muffenende 16 eingesetzt. Dabei liegt die Anschlagfläche 53 der Verriegelungsteile an der ebenfalls schräg verlaufenden Ringfläche 24 des Rands 20 an. Die Stützleiste 64 liegt an der dem Innenraum 70 zugewandten hinteren Fläche 59 der beiden Verriegelungselemente 42, 44 an, da der Außendurchmesser der Stützleiste 64 größer ist als der Innendurchmesser der auf dem Spitzende aufliegenden Verriegelungselemente 42, 44. Somit wird eine in Längsrichtung wirkende Zugkraft über die beiden Verriegelungselemente 42, 44 von dem Rand 20 des Muffenendes 16 aufgenommen. Das Rohr 60 kann also nicht mehr herausgezogen werden. Aufgrund der vier gleichmäßig in Umfangsrichtung verteilten Verriegelungsteile 52, 54 wird diese Zugkraft gleichmäßig über den Muffenquerschnitt verteilt.

Wie sich aus Fig. 1d ergibt, liegt ein Verriegelungselement 44 im verriegelten Zustand so im Muffenende 16, dass der Steg 56 im Bereich einer Ausnehmung 27 liegt und die beiden Verriegelungsteile 52, 54 links und rechts von dieser Ausnehmung.

In Fig. 1d ist das zweite Verriegelungselement 42 ebenfalls dargestellt, allerdings nicht in der verriegelten Position, sondern in der Einsetzposition, bei der die beiden Verriegelungsteile 52, 54 in den Ausnehmungen 26, 29 liegen.

Um zu verhindern, dass sich die Verriegelungselemente 42, 44 im verriegelten Zustand wieder in die Einsetzposition zurückdrehen und möglicherweise sogar wieder herausfallen, ist ein Halteelement 46 vorgesehen, das auf dem Steg liegend in die Ausnehmung eingebracht wird. Das Halteelement 46 stützt sich am zugewandten Rand 20 ab, so dass das Verriegelungselement nicht mehr verdreht werden kann. Das Halteelement 46 ist vorzugsweise aus einem flexiblen und elastischen Material, bspw. EPDM hergestellt, so dass es sich gut in die Ausnehmung 27 einsetzen lässt.

Die Ringdichtung 34 besitzt in einer ersten Variante die in Fig. 3a gezeigte Querschnittsform. Die Ringdichtung 34 besteht aus zwei Längsabschnitten 82, 84, die ein Halteteil 82 und ein Dichtteil 84 bilden. Eine mögliche Trennlinie zwischen diesen beiden Teilen 82, 84 ist in Fig. 3 schematisch dargestellt und mit dem Bezugszeichen 85 gekennzeichnet. Beide Teile 82, 84 können aus unterschiedlichen, an die Funktion angepassten Materialien bestehen.

Der Halteteil 82 weist eine halbrunde Außenfläche 86 auf, die zum einen Ende hin in eine gerade Stirnfläche 87 übergeht. Der Dichtteil 84 weist eine schräg verlaufende äußere Außenfläche 88 auf, die am anderen Ende der Ringdichtung in eine radiale Stirnfläche 89 übergeht.

Die Stirnfläche 89 des Dichtteils 84 weist eine Einkerbung 90 auf, so dass im Querschnitt eine Schwalbenschwanz-Form ausgebildet wird. Damit ist der innere Abschnitt 94 des Schwalbenschwanz 92 in radialer Richtung elastisch, um damit eine gute Abdichtung am Rohr 62 zu ermöglichen. Die große Stirnfläche 87 des Dichtteils 82 liegt im eingesetzten Zustand des Dichtrings 34 an einer entsprechenden Ringfläche des Muffenendes 16 an, wobei die große Fläche ermöglicht, hohe Drücke aufzunehmen.

In Fig. 3b ist eine zweite Variante der Ringdichtung 34 im Querschnitt dargestellt. Diese zweite Variante der Ringdichtung 34 ist besonders bevorzugt, da sie erlaubt, die notwendigen Montagekräfte gegenüber bisherigen Lösungen deutlich zu reduzieren und zudem die Dichtigkeit auch bei Außendrücken über 2 bar zu gewährleisten.

Die genaue Geometrie dieser Ringdichtung 34 ergibt sich aus der Fig. 3b und wird - soweit mit Worten möglich - nachfolgend erläutert. Die Ringdichtung 34 besitzt wiederum einen ersten Längsabschnitt 82 und einen zweiten Längsabschnitt 84, wobei der zweite Längsabschnitt 84 schwalbenschwanzförmig ausgebildet ist und mit dem Bezugszeichen 92 gekennzeichnet ist. In Fig. 3b ist zu erkennen, dass der obere Teil des Schwalbenschwanzes 92 eine Abflachung 101 besitzt. Ansonsten sind die Flächen des Schwalbenschwanzes 92 mit Rundungen ausgeführt, so dass - wenn überhaupt - nur wenige gerade Flächen oder Kanten in Übergängen vorhanden sind.

Im ersten Längsabschnitt 82 ist wiederum eine halbrunde, nach oben sich erstreckende Außenfläche 86 vorgesehen, die sozusagen einen Wulst bildet.

Im Vergleich zu der in Fig. 3a gezeigten Lösung sind die beiden Außenflächen 98, 99, die sich vom ersten Längsabschnitt zum zweiten Längsabschnitt erstrecken, nicht gerade, sondern konkav ausgebildet, wobei die konkave Wölbung immer nach innen verläuft. Dies ist sehr deutlich in Fig. 3b zu erkennen.

Schließlich ist im ersten Längsabschnitt im - radial gesehen - unteren Bereich eine Feder 96 vorgesehen, die sich ringförmig erstreckt und für die notwendige Stabilität der Ringdichtung sorgt. Diese Feder macht es möglich, die gesamte Ringdichtung 34 aus einem einzigen Material zu fertigen, das etwa eine Shore-Härte von 55 aufweist. Die Ringdichtung 34 gemäß Fig. 3b besteht also nicht mehr aus zwei unterschiedlichen Materialkomponenten, nämlich einem weichen und einem harten Material.

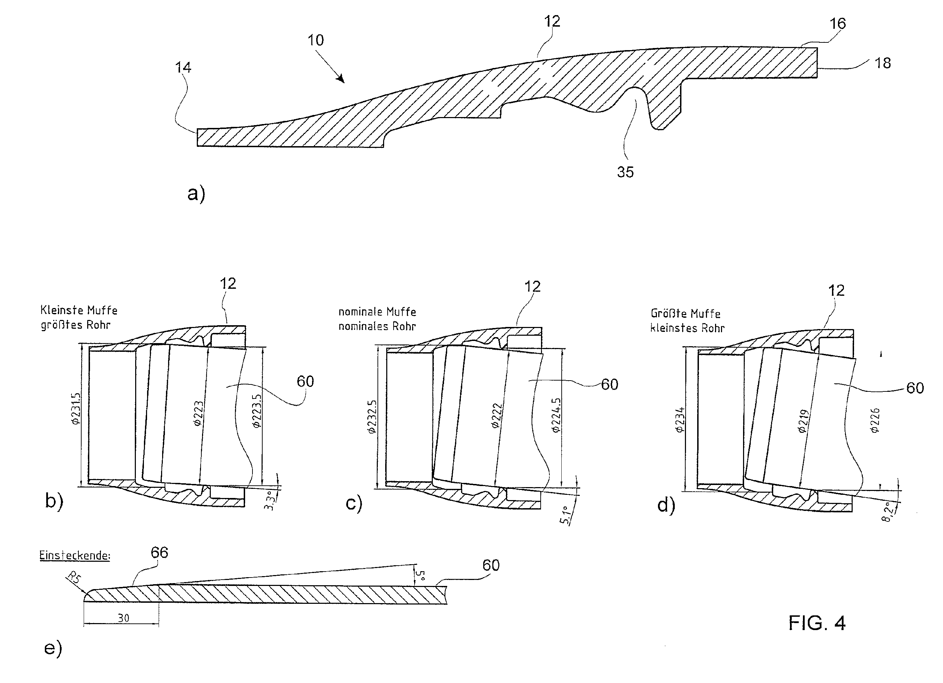

Schließlich sind in den Figuren 4a bis e nochmals verschiedene Ansichten der erfindungsgemäßen Muffenverbindung dargestellt, wobei insbesondere in den Figuren 4 b bis d der Grad der Abwinkelbarkeit des in das Muffenstück 12 eingesetzten Rohrs dargestellt ist. In der Fig. 4e ist ein Teil des Spitzendes 60 im Querschnitt dargestellt, wobei hier deutlich zu erkennen ist, dass das Ende dieses Spitzendes 60 eine geneigte Fläche aufweist, so dass eine Konusfläche 66 entsteht, die insbesondere das Einführen des Spitzendes in das Muffenstück erleichtert.

Die Montage der Muffenverbindung 10 wird wie folgt durchgeführt:

Zunächst wird das Innere des Muffenendes 16 gereinigt, um anschließend die Ringdichtung 34 in das Muffenende einlegen zu können. Nach entsprechender Reinigung des Spitzendes 60 wird dann dieses in das Muffenende 16 soweit eingeführt, bis es am Muffengrund anschlägt. Während des Einführens schmiegt sich die Dichtung 34 an die Oberfläche des Spitzendes 60 an.

Anschließend wird das erste Verriegelungselement 42 durch die Ausnehmungen 26, 29 in axialer Richtung eingeschoben und dann in entgegengesetztem Uhrzeigersinn in Umfangsrichtung verschoben, bis die Nase 57 des Anschlagelements 42 in der Mitte der Ausnehmung 29 liegt.

Als Nächstes wird das zweite Verriegelungselement 44 in die Ausnehmungen 26, 27 eingelegt, so dass die Fläche 53 hinter der Fläche 24 des Randes 20 liegt. Danach wird das Verriegelungselement 44 im Uhrzeigersinn verschoben, bis die Nase 57 in der Mitte der Ausnehmung 27 liegt, wie dies in Fig. 1d gezeigt ist.

Damit ist das Rohr 60 bereits verriegelt. Um jedoch zu verhindern, dass sich die beiden Verriegelungselemente 42, 44 wieder zurückverschieben und möglicherweise sogar aus der Ausnehmung 26-29 herausfallen, wird das Halteelement 46 über die Nase 57 hinweg in die Ausnehmung 27 bzw. 29 eingesetzt. Die beiden Halteelemente 46 sorgen damit dafür, dass sich die Verriegelungselemente nicht mehr verdrehen können.

Es versteht sich, dass Modifikationen und Änderungen der beschriebenen Verriegelungsvorrichtung und des Muffenendes 16 denkbar sind, ohne den Rahmen der vorliegenden Erfindung zu verlassen.

## Patentansprüche

1. Dichtungsring für eine Muffenverbindung zur Verbindung zweier Rohre, Rohrformstücke oder dgl., **dadurch gekennzeichnet, dass** ein Längsende des Dichtungsrings schwalbenschanzförmig ausgebildet ist und das gegenüberliegende andere Längsende einen sich nach außen erstreckenden Wulst (86) aufweist, und dass Außen- und Innenfläche, die die beiden Längsenden verbinden, - im Längsschnittkonkav ausgebildet sind.

2. Dichtungsring nach Anspruch 1, **dadurch gekennzeichnet, dass** im anderen Längsende eine Feder (96) vorgesehen ist, die sich in Umfangsrichtung erstreckt.

3. Dichtungsring nach Anspruch 1 oder 2, **dadurch gekennzeichnet, dass** der außen liegende Endteil des Schwalbenschwanzes (101) - im Längsschnitt- abgeflacht ausgebildet ist.

4. Dichtungsring nach einem der Ansprüche 1 bis 3, **dadurch gekennzeichnet, dass** der Dichtungsring (34) einen ersten Längsabschnitt aufweist, der eine nach Außen abgerundete (konvexe) Fläche aufweist, und einen zweiten Längsabschnitt aufweist, der schwalbenschwanzförmig ausgebildet ist, wobei der erste Längsabschnitt als Halteteil und der zweite Längsabschnitt als Dichtteil dienen.

5. Dichtungsring nach Anspruch 4, **dadurch gekennzeichnet, dass** sowohl die nach außen zeigende als auch nach innen zeigende Fläche (98, 99) des Dichtungsrings (34) eine konkave Form -im Längsschnitt betrachtet- haben.

6. Dichtungsring nach einmd er Ansprüche 1 bis 5, **dadurch gekennzeichnet, dass** der Dichtungsring (34) eine in Umfangsrichtung verlaufende Feder (96) im Bereich des ersten Längsabschnitts aufweist.

7. Dichtungsring nach Anspruch 6, **dadurch gekennzeichnet, dass** die Feder (96) einvulkanisiert ist.
